# EUROPEAN PATENT APPLICATION

(11) **EP 3 786 854 A1**
(43) Date of publication of application: **03.03.2021**
(21) Application number: 19194452.9
(22) Date of filing: 29.08.2019
(51) Int. Cl.: G06N 3/08, G06N 3/04

(54) **METHODS AND SYSTEMS FOR DETERMINING DRIVING BEHAVIOR**

(71) Applicant: Visteon Global Technologies, Inc., Van Buren Township, MI 48111-5711 (US)
(72) Inventor: SZEKELY, David, 76133 Karlsruhe (DE); PFEIFLE, Martin, 72297 Seewald (DE); MAINBERGER, Markus, 71640 Ludwigsburg (DE); MAHLER, Tobias, 76227 Karlsruhe (DE); AMMANN, Sebastian, 76137 Karlsruhe (DE)
(74) Representative: MERH-IP Matias Erny Reichl Hoffmann Patentanwälte PartG mbB

(57) **Abstract**

A system for a vehicle is described, wherein the system comprises a detection unit configured to capture sensor data regarding an environment of a vehicle and corresponding control commands provided by a human driver while operating the vehicle. The system further comprises a control unit coupled to the detection unit and configured to: generate training data based on the sensor data and control commands, and train a neural network based on the training data. The so trained neural network receives sensor data regarding the environment of the vehicle as an input and proposes corresponding control commands for the vehicle as an output. The detection unit is further configured to validate the neural network to generate a validation result, and to determine based on the validation result if the neural network should be activated for use in a driver assistance system. In this case, the neural network is activated accordingly.

## Description

### TECHNICAL FIELD

The present document relates to determining the driving behavior of a human driver or of a driver assistance system, for example to provide information relevant for activating a driver assistance system, or for estimating the driving skills of a person operating a vehicle.

### BACKGROUND

A vehicle, notably a road vehicle, such as a car, a bus, a truck or a motorcycle, may comprise an environment sensor. The environment sensor is configured to capture sensor data with regards to an environment of the vehicle. The environment sensor may include a plurality of sensors. As an example, the environment sensor may include a camera, a radar sensor and/or a lidar sensor. The sensor data from the environment sensor may be used, by a system, to detect objects. The objects, for example, may include other vehicles or road users within the environment of the vehicle. The sensor data, for example, may be used by the system to prepare and provide information for operating the vehicle, such as via an automated driver assistance system.

### BRIEF SUMMARY OF THE INVENTION

According to an aspect, a method for providing driver assistance in a vehicle is described. For example, the vehicle can be a car, a bus, a truck or a motorcycle. The method comprises capturing in the vehicle, while a human driver is operating the vehicle, sensor data regarding an environment of the vehicle and corresponding control commands provided by the human driver. For example, the sensor data may be captured by using a camera, a radar sensor and/or a lidar sensor, attached to the vehicle. Training data is generated based on the sensor data and control commands, and is used for training a neural network. The neural network is defined to receive sensor data regarding the environment of the vehicle as an input, and to propose corresponding control commands for the vehicle as an output. The method further comprises validating the neural network to generate a validation result. The so generated validation result is used for determining if the neural network should be activated for use in a driver assistance system. If this is the case, the neural network is activated accordingly. As an example, the validation result may be used to determine if the trained neural network replicates the human driver behavior with sufficient accuracy, for example by comparing the validation result with a validation criteria and/or a threshold value, for example to support a smooth and/or seamless transition between the human driver and the driver assistance system using the neural network.

According to another aspect, a method for determining the driving behavior of a human driver is described. The method comprises capturing in a vehicle, while the human driver is operating the vehicle, sensor data regarding an environment of the vehicle and corresponding control commands provided by the human driver. Training data is generated based on the sensor data and control commands, and is used for training a neural network. For example, the neural network can be trained to learn the driving behavior of the human driver as described by the training data. The method further includes simulating a virtual environment including a virtual vehicle such that the neural network receives virtual sensor data regarding the virtual environment of the virtual vehicle as an input and proposes corresponding virtual control commands for controlling the virtual vehicle as an output. By this way, simulation results can be generated for different road and traffic situations, such as to observe and analyze the driving behavior represented by the neural network for such situations. The simulation can relate to a computer simulation performed based on a road model and a car model. The simulation results are analyzed to determine the driving behavior of the neural network, representing the driving behavior of the human driver.

According to another aspect, a method for comparing the driving behaviors of a driver assistance system and a human driver is described. The method comprises capturing in a vehicle, while the human driver is operating the vehicle, sensor data regarding an environment of the vehicle and corresponding control commands provided by the human driver. Based on the captured sensor data, a driver assistance system is operated to propose corresponding control commands. Thus, the driver assistance system is configured to propose control commands for operating the vehicle, for example steering or throttle commands, but the proposed control commands are not actually applied for vehicle control. The vehicle is manually controlled by the human driver. The method further comprises comparing the control commands provided by the human driver and the control commands proposed by the driver assistance system, such as to generate a comparison result and display the same to the human driver. The comparison result is displayed by using a human-machine-interface (HMI) implemented in the vehicle.

According to another aspect, a system including a vehicle is discussed, wherein the system is adapted to perform the above method for providing driver assistance in the vehicle. The vehicle comprises a detection unit configured to capture sensor data regarding an environment of the vehicle and corresponding control commands provided by a human driver while operating the vehicle. The vehicle further comprises a driver assistance system and a control unit. The control unit is coupled to the driver assistance system and detection unit, and is configured to:
generate training data based on the sensor data and control commands;
train a neural network based on the training data, such that the neural network receives sensor data regarding the environment of the vehicle as an input and proposes corresponding control commands for the vehicle as an output;
validate the neural network to generate a validation result; and
determine based on said validation result if the neural network should be activated for use in the driver assistance system, and if this is the case, activate the neural network accordingly. As an example, the validation result may be used to determine if the trained neural network replicates the human driver behavior with sufficient accuracy, for example by comparing the validation result with a validation criteria and/or a threshold value, for example to provide a smooth and/or seamless transition between the human driver and the driver assistance system using the neural network.

According to another aspect, a system for determining the driving behavior of a human driver is discussed. The system is adapted to perform the above method for determining the driving behavior of a human driver. More specifically, the system comprises a detection unit of a vehicle configured to capture sensor data regarding an environment of the vehicle and corresponding control commands provided by a human driver while operating the vehicle. The system further comprises a control unit adapted to be coupled to the detection unit, and configured to:
generate training data based on the sensor data and control commands;
train a neural network based on the training data, for example to have the neural network learn the driving behavior of the human driver as described by the training data;
simulate a virtual environment comprising a virtual vehicle such that the neural network receives virtual sensor data regarding the virtual environment of the virtual vehicle as inputs and proposes corresponding virtual control commands for controlling the virtual vehicle as outputs, such as to generate simulation results; and
analyze said simulation results, such as to determine the driving behavior of the neural network, representing the driving behavior of the human driver.

Alternatively, the control unit can be configured to forward the neural network to a hardware unit external to the vehicle, wherein the hardware unit is configured to perform said simulation of the virtual environment and/or the corresponding analysis of simulation results.

According to another aspect, a system including a vehicle is described, wherein the system is adapted to perform the above method for comparing the driving behaviors of a driver assistance system and a human driver. More specifically, the system comprises a detection unit configured to capture sensor data regarding an environment of the vehicle and corresponding control commands provided by a human driver while operating the vehicle. The system further comprises a human-machine-interface (HMI) and a driver assistance system, both implemented in the vehicle. Moreover, the system includes a control unit of the vehicle, which is coupled to the detection unit, driver assistance system and human-machine-interface (HMI). The control unit is configured to:
operate the driver assistance system based on the captured sensor data such as to generate control commands proposed by the driver assistance system;
generate a comparison result by comparing the control commands provided by the human driver with the control commands proposed by the driver assistance system; and
display the comparison result to the human driver by using the human-machine-interface (HMI).

One or more embodiments of the present document use sensor data regarding an environment of a vehicle and corresponding control commands provided by a human driver operating the vehicle, such as to decide if to activate a driver assistance system of the vehicle, or to determine the driving behavior of the human driver or of the driver assistance system. In this way, the sensor data and control commands are efficiently used for gaining insight into the driving behavior of the human driver and/or the driver assistance system. For example, this insight into the different driving behaviors can be used for monitoring, educational or comparison purposes, and/or to decide, if the driver assistance system is reliable enough to operate the vehicle in an automatic driving modus, with or without a level of human intervention.

### BRIEF DESCRIPTION OF THE DRAWINGS

Fig. 1 shows example components of a system including a vehicle;
Fig. 2 shows a flow chart of an example method for providing driver assistance in a vehicle;
Fig. 3 shows a flow chart of an example method for determining the driving behavior of a human driver;
Fig. 4 shows the simulation of a neural network in a virtual environment of a virtual vehicle to generate virtual control commands;
Fig. 5 shows a flow chart of an example method for comparing the driving behaviors of a driver assistance system and a human driver;
Fig. 6 shows a frame by frame comparison of steering commands and throttle commands;
Fig. 7 shows aggregated comparison information of steering commands and throttle commands.

### DETAILED DESCRIPTION OF THE INVENTION

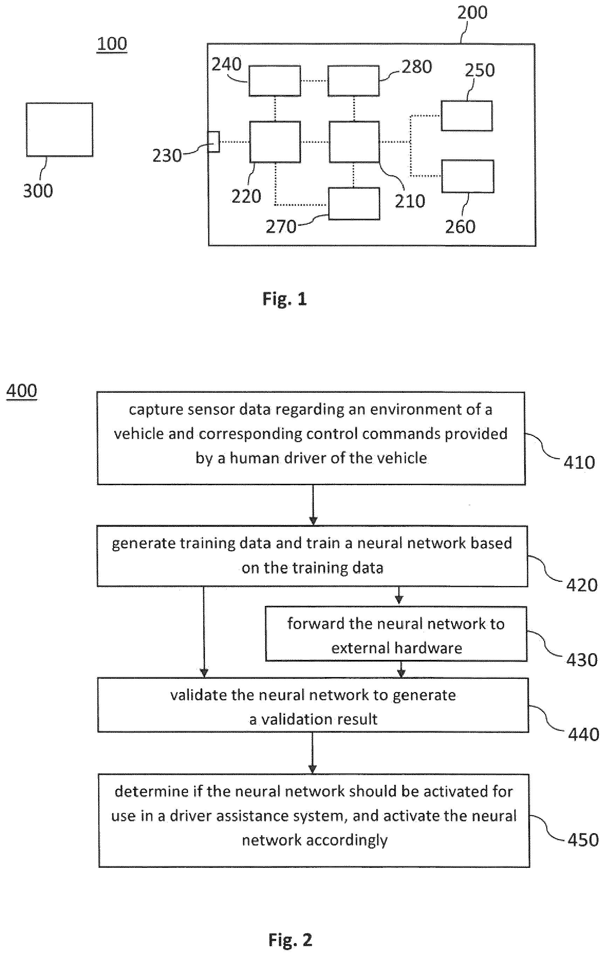

As outlined above, one or more embodiments of the present document relate to using sensor data regarding an environment of a vehicle and corresponding control commands provided by a human driver operating the vehicle, such as to decide if to activate a driver assistance system of the vehicle, or to determine the driving behavior of the human driver or of the driver assistance system. In this context, Fig. 1 shows an example of a system 100 including a vehicle 200, For example, the vehicle 200 can be a car, a bus, a truck or a motorcycle. The vehicle 200 comprises a detection unit 220 coupled to environment sensors 230 which are configured to capture sensor data indicative of the environment of the vehicle 200. The environment may include the surroundings around the vehicle 200. In particular, the vehicle 200 may comprise as environment sensors 230 a camera configured to provide video or camera data, a radar sensor configured to provide radar data and/or a lidar sensor configured to provide lidar data. The detection unit 220 is further adapted to capture control commands provided by a human driver 240 operating the vehicle 200. For example, the human driver may provide steering commands and throttle commands to manually operate the vehicle 200.

A control unit 210 of the vehicle 200 is coupled to the detection unit 220 and may be configured to operate one or more actuators 250, 260 of the vehicle 200, for example in dependence of the control commands provided by the human driver 240. Example actuators are the throttle 250 of a propulsion motor or engine, a braking system and/or a steering system 260 of the vehicle 200. Thus, the actuators 250, 260 may be configured to provide forward and/or sideways control of the vehicle 200. The control unit 210 may be configured to perform the forward and/or sideways control of the vehicle 200 based on the control commands provided by the human driver 240, for example based on throttle and/or steering control commands provided by the human driver 240.

Alternatively, the control unit 210 may be configured to perform the forward and/or sideways control of the vehicle 200 based on control commands provided a driver assistance system 270. For this purpose, as shown in Fig. 1, the vehicle 200 may comprise a driver assistance system 270 coupled to the control unit 210, such as to propose control commands suitable for controlling the vehicle 200 in an autonomous manner (e.g. to provide an (advanced) driver assistance system). The driver assistance system 270 is coupled to the detection unit 220, for example directly as shown in Fig. 1 or indirectly via the control unit 210. In this way, the driver assistance system 270 can propose control commands based on sensor signals captured by the environment sensors 230.

Notably, the control commands proposed by the driver assistance system 270 may or may not be used by the control unit 210 to operate the vehicle 200. For example, the control unit 210 may activate or de-activate the use of control commands proposed by the driver assistance system 270 for operating the vehicle 200. In the de-activated state, the control unit does not forward the proposed control commands to the actuators 250, 260 for controlling the vehicle 200, but may still use the proposed control signals for other purposes, for example for data analysis, signal processing, and/or control command comparison purposes.

The vehicle 200 of the system 100 shown in Fig. 1 may further comprise a human machine interface (HMI) 280 which is coupled to the control unit 210. The human machine interface (HMI) 280 may be adapted to allow the control unit 210 to convey information to the human driver 240 and/or to allow the human driver 240 to interact with the control unit 210. For example, the human machine interface (HMI) 280 may comprise a touch display arranged inside the vehicle 200 providing a user friendly interface between the control unit 210 and human driver 240. Similarly, the human machine interface (HMI) 280 may include a camera system arranged inside the vehicle for detecting gestures given be the human driver, and may forward the same as user inputs to the control unit 210. By example, the human machine interface (HMI) 280 may include a display system implemented to visualize information provided by the control unit 210, for example by displaying information on a screen arranged in the dashboard of the vehicle 200, or by projecting information on a window, for example the front window, of the vehicle 200.

It should be noted that although Fig. 1 shows the control unit 210 and detection unit 220 as separate coupled units, this illustration does not exclude an implementation where the detection unit 220 forms part of the control unit 210, or wherein the detection unit 220 and control unit 210 both form part of a not shown signal processing unit.

As shown in Fig. 1, the system 100 may comprise a hardware unit 300 which is external to the vehicle 200. For example, the hardware unit 300 may represent a computer, for example for performing data analysis, simulations, and/or decision making based on information provided by the control unit 210. For example, the hardware unit 300 may represent a computer in a server facility, which is coupled to the control unit 210 of the vehicle 200 via a communication link, for example via a network connection. The hardware unit 300 may represent a computer in a cloud environment, coupled to the control unit 210 of the vehicle 200.

Fig. 2 shows a flow chart of an example method 400 for providing driver assistance in a vehicle 200. The method 400 may be performed by the control unit 210 of the vehicle 200. The method 400 comprises capturing in the vehicle, while the human driver is operating the vehicle, said sensor data regarding the environment of the vehicle and the corresponding control commands being provided by the human driver 410. For example, the human driver 240 may provide steering commands and throttle command for manually operating and moving the vehicle 200 in said environment. The sensor data may be captured by using environment sensors 230 attached to the vehicle, for example a camera, a radar sensor and/or a lidar sensor. In other words, while the human driver is 'manually' operating the vehicle 200, the sensor data and control commands are being collected.

The so collected sensor data and control commands are used for generatingtraining data, which is then is used for training a neural network 420. The neural network is structured and defined to receive as input said sensor data regarding the environment of the vehicle, and to propose as corresponding outputs control commands for operating the vehicle. It follows that the neural network represents a driver observing the environment of the vehicle 200, and proposing corresponding vehicle control actions based on the environment. For example, the input of the neural network may comprise image or video data taken from a camera attached to the vehicle, and the output of the neural network may comprise throttle commands and steering commands, which are proposed by the neural network to react to different situations described by the image or video data. For example, the neural network may be adapted to propose control commands to steer the vehicle along a street lane at a constant speed or at a certain distance to a leading car, and/or to react to objects or pedestrian traffic crossing or potentially crossing the intended travel path of the vehicle.

By example, the neural network may represent a convolutional neural network, a deep learning neural network, a multi-layer perceptron neural network, a radial basis function neural network, a general regression neural network, a recurrent neural network, or any other type of neural network suitable for performing the above mapping from environment descriptions to proposed driver control actions.

When the neural network has been trained, the method 400 validates the neural network by generating a validation result 440. This can be performed by the control unit 210 of the vehicle 200, or by using hardware 300 which is external to the vehicle 200. In the latter case, the method 400 forwards the trained neural network to the external hardware 430 for further analysis or processing. In an example, the validation result can be generated by comparing control commands proposed by the neural network with reference control commands. In this respect, the reference control commands represent ground truth outputs the neural network should ideally propose based on particular environment sensor data inputs. In other words, the neural network proposes control commands based on environment sensor data inputs, and if the so proposed control commands closely resemble the control commands described by the reference control commands (for the same environment sensor data inputs) the validation result may indicate that the neural network provides a close match to the desired or expected driver behavior. Similarly, if the control commands proposed by the neural network deviate significantly from the reference control commands, the neural network validation result may indicate that the neural network is not reliable or lacks precision. For example, as described in more detail below, the validation result may indicate how well the control commands proposed by the neural network resemble the control commands which the human driver actually used to manually control the vehicle when confronted with the same vehicle environment situation.

Based on this information, the method 400 uses the generated validation result for determining if the neural network should be activated for use in a driver assistance system 270. If this is the case, the neural network is activated accordingly 450. For this purpose, the validation result can indicate a corresponding quality of the neural network, or be compared with at least one threshold value to determine the quality level of the neural network. The method can also comprise displaying the validation result, for example by indicating the quality or quality level of the neural network to the human driver 240. The validation result can be displayed to the human driver 240 by using a human-machine-interface (HMI) 280 implemented in the vehicle. Moreover, the human driver can use the human-machine-interface (HMI) to respond to the validation result by requesting activation of the neural network for use in the driver assistance system 270. In this case, the method 400 activates the neural network accordingly 450.

It follows that the human driver 240 can use the human-machine-interface (HMI) 280 to monitor the quality of the neural network, for example on a day by day basis, wherein the training of the neural network is repeatedly improved based on new sensor data and control commands captured in the vehicle. Then, when the human driver 240 feels confident enough, he may consider using the human-machine-interface (HMI) 280 for activating the neural network for use in the driver assistance system 270, for example to perform automated driving.

The human-machine-interface (HMI) 280 may be adapted to allow the human driver 240 to select, define and/or edit the training data used for training the neural network. For example, the human driver 240 may select to generate a neural network which is well trained for a particular route or road scenario, for example for commuting between home and work, or for highway driving. The human driver 240 may select to train and collect a plurality of such neural networks, such that specialized neural networks can be activated for use in the driver assistance system for particular cases of road conditions, traffic, time-of-day, navigated routes and/or road stretches.

In an example, the above discussed validating the neural network may include generating validation data based on the sensor data and control commands, wherein the validation data is different from the training data. In this way, the validation data includes pairs of sensor data and control commands which describe how the human driver reacted to particular environment conditions, for example by providing particular throttle commands and steering commands. For comparison, control commands are proposed by the neural network as outputs, based on sensor data taken from the validation data as inputs. Thus, the neural network is validated by comparing the control commands proposed by the neural network to the control commands describing how the human driver actually reacted to the particular environment situation, as taken from the validation data. In this way, the validation result can describe how accurately the control commands proposed by the neural network resemble the control commands provided by the human driver, for the same environment situation, i.e. where the human driver and the neural network perceive the same environment situation as described by the environment sensor data. It follows that the validation result indicates how accurately the neural network describes the driving behavior of the human driver, i.e. how accurately the neural network provides a "driver fingerprint" corresponding to the human driver behavior, as discussed in detail below.

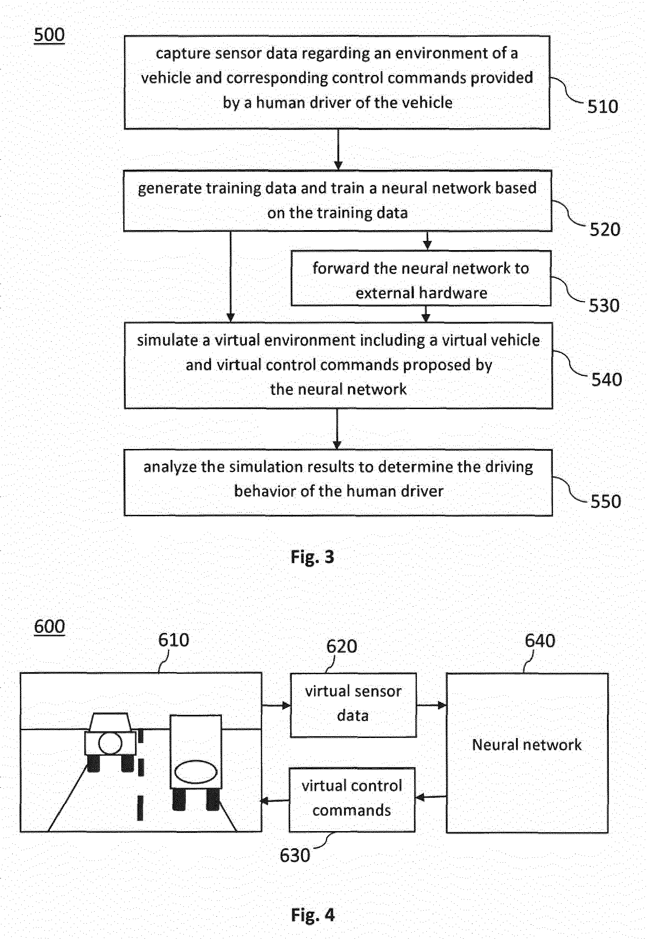

Alternatively, validating the neural network may include simulating a virtual environment including a virtual vehicle, wherein the neural network is coupled to control the virtual vehicle. For this purpose, as illustrated in the simulation environment 600 shown in Fig. 4, the simulation can be based on a computer simulation of the movement of the virtual vehicle in a particular road and/or traffic scenario, and can be calculated based on a mathematical road model and a mathematical vehicle model 610. As shown in Fig. 4, the road model and vehicle model 610 are used for calculating virtual sensor data 620, for example virtual video streams or images which are simulated as being captured by a camera attached to the virtual vehicle. The simulated virtual sensor data 620 is conveyed to the neural network 640 to obtain corresponding virtual control commands 630 proposed by the neural network 640, for example virtual throttle commands and virtual steering commands for controlling the virtual vehicle. The road model may describe the route where the driver assistance system is intended to be activated, for example a highway or an urban road system including moving objects, such as for example other vehicles and/or pedestrians. The vehicle model describes the movement of the virtual vehicle in the respective road scenario, when being controlled by the virtual control commands 630 proposed by the neural network 640. The validation of the neural network may include analyzing the resulting simulated movement of the virtual vehicle and/or the corresponding virtual control commands provided by the neural network, such as to determine said validation result.

For example, the simulation results may show that the neural network handles relevant traffic and road scenarios by avoiding accidents with high probability and reliability. Similarly, the simulation results may show that the neural network provides stable, efficient and/or robust control commands for steering the virtual vehicle along a lane, for example a lane of a highway in different lighting, traffic, time-of-day and/or road conditions. In these cases, the resulting validation result may be determined to indicate that that neural network is suitable for use in the driver assistance system 270. As mentioned above, the validation result can indicate the corresponding quality of the neural network, or be compared with at least one threshold value to determine the quality level of the neural network. Moreover, the validation result may be displayed to the human driver 240 via the human-machine-interface (HMI) 280 for manually activating the neural network for use in the driver assistance system 270.

The training of the neural network may be performed by a computing unit comprised by the vehicle, such as for example the control unit 210. For example, the computing unit 210 may include a graphics processor unit (GPU), for example a graphics processor unit (GPU) of the driver assistance system 270, adapted to perform the neural network training.

By example, the training of the neural network may be performed in the background while driving the vehicle or when the vehicle is parked. In an example, the training of the neural network can be initiated by a pre-installed neural network, for example a general neural network having a pre-installed network structure and initialized weights as provided by a respective car or vehicle manufacturer.

Any, some of, or all of the steps of: training the neural network 420, validating the neural network 440, and determining based on said validation result if the neural network should be activated for use in a driver assistance system 450, may be performed by said hardware 300 external to the vehicle 200. As mentioned above, the external hardware unit 300 may represent a computer, for example a computer in a server facility, which is coupled to the control unit 210 via a communication link, for example via a network connection. In an example, the hardware unit 300 represents a computer in a cloud environment, coupled to the control unit 210. In this way, the vehicle 200 may require less processing power for performing the respective tasks, which is particularly efficient if the vehicle is not equipped with fast processors, such as for example with a graphics processor unit (GPU) implemented in a driver assistance system 270.

Moreover, by having the tasks of validating the neural network and/or determining based on the validation result if the neural network should be activated for use in a driver assistance system 450, performed by the hardware external to the vehicle, an external agency or firm can take responsibility for such activation. For example, an insurance company or official authority, can be responsible for allowing activation of the neural network for use in the driver assistance system 270. In an example, the human driver 240 may activate the neural network for use in a driver assistance system 270, only if the external agency or firm has validated and accepted its use for such purposes, for example by responding to a corresponding request issued by the control unit 210 via the respective communication link. It follows that standardized tests for validating the applicability of neural networks for driver assistance systems can be efficiently implemented in a structured and protected manner in external hardware 300. Further, this arrangement makes it more difficult to maliciously manipulate the activation of the neural network based driver assistance systems.

Forwarding the neural network to the external device generally requires much less bandwidth than transmitting the captured sensor data and control commands used for training such networks. Hence, the proposed scheme is also particularly efficient when considering the required communication link bandwidth coupling the external hardware unit 300 and control unit 210, and thus supports easier handling and processing of information.

Fig. 3 shows a flow chart of an example method 500 for determining the driving behavior of a human driver 240. The method 500 may be performed by the control unit 210 of the vehicle 200. The method 500 comprises capturing in a vehicle, while the human driver is operating the vehicle, sensor data regarding an environment of the vehicle and corresponding control commands provided by the human driver 510. Training data is generated based on the sensor data and control commands and used for training a neural network 520. In this respect, the above discussion on the method steps 410, 420 shown in Fig. 2 also applies to the method steps 510 and 520 of Fig. 3.

It follows that the neural network is trained based on sensor data and corresponding control commands provided by the human driver, such as to "learn" the driving behavior of the human driver. Hence, the trained neural network can be regarded as providing a "driver fingerprint" describing the driving behavior of the human driver. For example, if the human driver has an aggressive driving style, he may react to certain traffic situations, captured by the sensor data, in an aggressive manner which is replicated by the corresponding captured control commands. Thus, by training the neural network to learn the behavior defined by the training data, i.e. as given by the captured sensor data and corresponding control commands, the neural network will learn the respective aggressive driving style and can be viewed as a "driver fingerprint" describing the driving behavior of the human driver 240.

Although not shown in Fig. 3, the method 500 may further include validating the trained neural network, for example, as discussed above, to generate a validation result describing how accurately the control commands proposed by the neural network resemble the control commands provided by the human driver, for the same environment situation. Moreover, the method 500 may compare the validation result to a criteria, such as for example a quality threshold value, such as to verify and conditionally allow its use for determining the driving behavior of the human driver.

The method 500 for determining the driving behavior of a human driver 240 includes simulating a virtual environment including a virtual vehicle being controlled by the neural network. It follows that the neural network, representing a "driver fingerprint", is implemented in a simulation as a virtual driver of the virtual vehicle. As discussed above in the context of the simulation environment 600 shown in Fig. 4, the respective simulation results can describe the movement of the virtual vehicle in a particular road and/traffic scenario, and can be calculated based on a mathematical road model and a mathematical vehicle model 610. As shown in Fig. 4, the mathematical road model and vehicle model 610 are used for calculating virtual sensor data 620, for example virtual video streams or images which are simulated as being captured by a camera attached to the virtual vehicle. The simulated virtual sensor data 620 is then conveyed to the neural network 640 to obtain corresponding virtual control commands 630 proposed by the neural network 640, for example virtual throttle commands and virtual steering commands for controlling the virtual vehicle. By example, the road model may describe a highway or an urban road, including moving objects, such as for example other vehicles and/or pedestrians. The vehicle model describes the movement of the virtual vehicle in the respective road scenario, when being controlled by the virtual control commands 630 proposed by the neural network 640.

The simulation results are then analyzed to determine the driving behavior of the human driver 550. For example, if the simulation result show that the neural network, representing the "driver fingerprint", handles difficult traffic and road scenarios by avoiding accidents with high probability, the analysis may conclude that the driving behavior of the human driver is defensive-minded and reliable. For this purpose, the simulation results may provide a driver performance indicator, for example a value indicating how well the driver can handle the difficult traffic and/or road scenarios, wherein the value can be compared with a threshold value to determine whether the driving behavior is acceptable in a real-world environment. Further, the virtual control commands of the neural network may be analyzed to determine if the neural network provides stable, efficient and robust control commands, for example when steering the virtual vehicle along a lane, for example a lane of a highway in different lighting, traffic, time-of-day and/or road conditions. Thus, the analysis of the simulation results allows determining the driving behavior of the human driver, for example to estimate the driving skills of a person. Further, the simulation may be based on simulating a plurality of neural networks, wherein each neural network has been trained to provide a "driver fingerprint" for a different traffic and/or road scenario. The so generated simulation results may be further grouped according to the time-of-day, weather conditions and/or road conditions, when the sensor data and control commands were captured in the vehicle. In this way, the analysis of simulation results provides additional insight into the driving skills of the human driver, which may be further classified based on the above different criteria.

In an example, the simulation and/or analysis of simulation results 540, 550 can be performed using hardware 300 which is external to the vehicle 200. For this purpose, the neural network can be forwarded to the external hardware for further processing 530. As mentioned above, the external hardware unit 300 may represent a computer, for example a computer in a server facility, which is coupled to the control unit 210 via a communication link, for example via a network connection. In an example the hardware unit 300 may represent a computer in a cloud environment, coupled to the control unit 210. In this way, the vehicle 200 may require less processing power for performing the respective tasks, which may be particularly efficient if the vehicle is not equipped with fast processors. Moreover, the external hardware may belong to an agency, company or organization, such as for example an insurance company or governmental organization.

For example, an insurance company may receive the neural network as a "driver fingerprint" and simulate the same to determine the driving skills of a client, or a potential client, for example to calculate an insurance policy offer based on the driving skills.

Similarly, the neural network may represent a "driver fingerprint" of a student learning how to drive. Thus, if the driving teacher considers the student to be ready for receiving the driving license, the neural network can be passed to a driving agency which performs corresponding tests on a simulator. If these tests are passed, the student may be given the driving license. A benefit of this approach is that the neural network provides an "aggregated" view of the driving capabilities and does not depend on temporary affects such as nervousness during the driving exam, and unforeseen situations during the exam. In an example, in addition to the above "neural network exam", it could be accompanied by a traditional exam.

Further, forwarding the neural network to the external hardware requires much less bandwidth than transmitting the captured sensor data and control commands used for training such networks. It follows that the proposed scheme is particularly efficient when considering the required bandwidth of the communication link coupling the external hardware unit 300 and control unit 210, and thus supports efficient handling and processing of information.

The step of training of the neural network may be performed by a computing unit comprised by the vehicle 200, for example the control unit 210, or may be performed by the external hardware 300. Although the latter case requires less computational power to be implemented in the vehicle 200, a sufficient connection link bandwidth must be provided for transmitting the respective training data from the vehicle 200 to the external hardware 200.

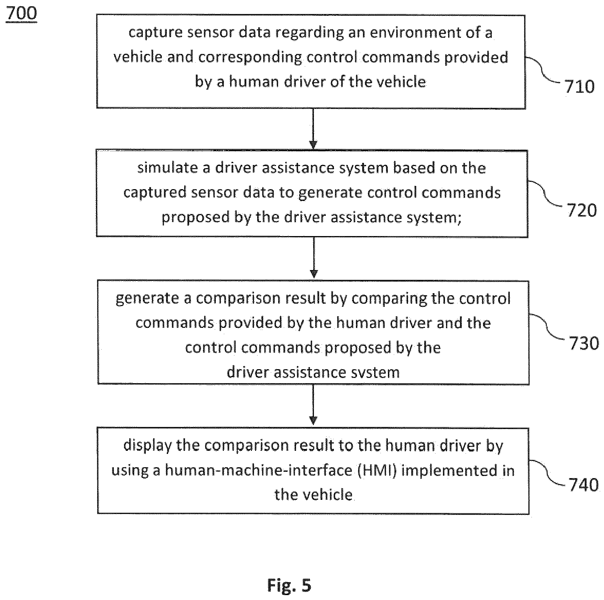

Fig. 5 shows a flow chart of an example method 700 for comparing the driving behaviors of a driver assistance system 270 and a human driver 240. The method 700 may be performed by the control unit 210 of the vehicle 200.

As shown in Fig. 5, the method 700 comprises capturing in the vehicle, while the human driver is manually operating the vehicle, sensor data regarding an environment of the vehicle and corresponding control commands provided by the human driver 710. Based on the captured sensor data, the driver assistance system is simulated to propose control commands 720 for operating the vehicle, for example steering or throttle commands. Thus, these control commands are only simulated, i.e. are not actually applied for operating the vehicle. The method further comprises comparing the control commands provided by the human driver and the control commands proposed by the driver assistance system 730. For this purpose, a comparison result is generated based on the comparison of control commands and displayed to the human driver 240. The comparison result is displayed by using a human-machine-interface (HMI) 270 implemented in the vehicle 200.

For example, a corresponding self-driving car can be equipped with a suitable sensor set, a suitable processing unit and a suitable driver assistance system to generate throttle and steering commands, based on the respective sensor data, for automatically controlling the vehicle. However, rather than using the so produced throttle and steering commands for automatic driving, the proposed control commands are generated during manual driving, but are not used for controlling the vehicle. More specifically, the throttle and steering commands are produced by simulating the driver assistance system, without being used for automatic driving, but are compared to the control commands provided by the human driver operating the vehicle.

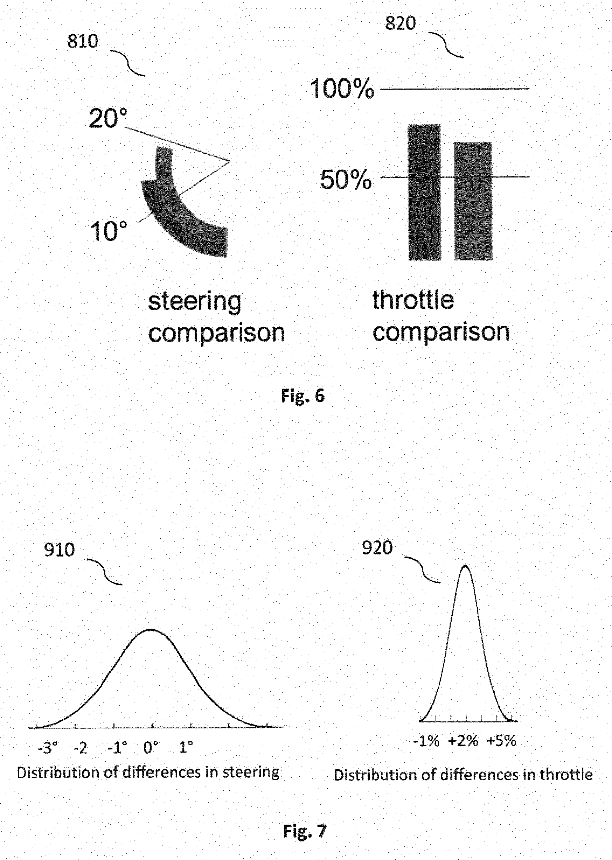

Fig. 6 shows a possible comparison result for the steering commands 810 and throttle commands 820 being displayed to the human driver via a human machine interface (HMI) 280. The human machine interface (HMI) 280 may include a display system implemented to visualize the comparison result 810, 820 to the human driver 240. For example, the display system may display the respective information on a screen arranged in the dashboard of the vehicle 200, or by projecting information on a window, for example the front window, of the vehicle 200.

The example of comparison results 810, 820 shown in Fig. 6 include both the steering commands 810 and throttle commands 820 as proposed by the driver assistance system, and as provided by the human driver manually operating the vehicle 200. In this example, the comparison results 810, 820 are displayed on a frame by frame basis. More specifically, the sensor data regarding the environment of the vehicle 200 includes a video stream taken from a camera 230 attached to the vehicle 200, and the comparison result is generated and displayed based on a single frame of the video stream. In other words, a frame by frame, or instantaneous, illustration of comparison results 810, 820 is provided to the human driver 240.

Fig. 7 shows an alternative example, wherein the comparison results for the steering control command 910 and throttle control command 920 are generated and displayed by considering statistical information of a plurality of frames of the video stream. Hence, not only frame by frame information is used, but an aggregated comparison of control commands is generated based on a plurality of frames taken from the video stream. For example, the aggregated comparison of control commands can be derived by applying one of the following aggregate functions to the difference 'd' between throttle and steering commands of the manual and automated driving control commands:
- average(|d|)
- min(|d|) and max (|d|)
- standard_deviation (d) (see for example Fig. 7).

Also more sophisticated information could be provided which takes the driven velocity, day or night, motorway or urban scenarios, etc. into account and prepares as comparison results the statistical information for these scenarios.

It follows that the human driver is provided with an illustration of a comparison result showing the difference between the control commands he used for manual driving, and the corresponding control commands proposed by the driver assistance system, either on a frame by frame basis or by aggregating information in a plurality of frames. This information may be valuable to the driver. For example, the displayed comparison results 810, 820, 910, 920 helps the driver to see how the respective self-driving car would behave differently from his own driving, and the human driver may use this information to improve his driving style based on the control commands proposed by the driver assistance system 270. In a different example, the human driver may monitor the comparison results 810, 820, 910, 920 to gain trust in the self-driving proposed by the driver assistance system 270, and may thus enable it more frequently. For example, the driver could try to imitate the self-driving system to create throttle and steering control commands following the proposals provided by the driver assistance system 270. In this way, the human driver 240 may learn to improve his driving style and/or gain trust in using the driver assistance system for automated driving.

Moreover, as the comparison results 810, 820, 910, 920 describe the deviation between the human driving style and the proposed automated driving actions, the comparison can also be regarded as providing a "driver fingerprint" describing the human driver behavior. In this respect, the above discussed aggregated information evaluates the human driving behavior over time, and may thus be particularly useful for generating the corresponding "driver fingerprint". In an example, as discussed in detail above, such a "driver fingerprint" may be forwarded to hardware 300 external to the vehicle 200 for further analysis, for example to determine by the external hardware 300 the driving skills of the human driver 240. The so generated aggregated comparison result can represent statistical information describing a large amount of driving data by using only a few statistical parameters, such as for example the average value and standard deviation of a particular dataset. Thus, the aggregated comparison result provides a compact version of a "driver fingerprint" which can be efficiently transmitted to and processed by external hardware, for example hardware used by the above discussed insurance company or official authority for determining the driving skills and/or behavior of the human driver 240.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. A method for providing driver assistance in a vehicle (400), comprising:
capturing, in a vehicle, while a human driver is operating the vehicle, sensor data regarding an environment of the vehicle and corresponding control commands provided by the human driver (410);
generating training data based on the sensor data and control commands (420);
training a neural network based on the training data, such that the neural network receives sensor data regarding the environment of the vehicle as an input and proposes corresponding control commands for the vehicle as an output (430);
validating the neural network to generate a validation result (440); and
determining based on said validation result if the neural network should be activated for use in a driver assistance system, and activating the neural network accordingly (450).

2. The method (400) according to claim 1, wherein
said validating the neural network (440) includes:
generating validation data based on the sensor data and control commands, wherein the validation data is different from the training data;
generating control commands proposed by the neural network as outputs, based on sensor data taken from the validation data as inputs; and
comparing the control commands proposed by the neural network to control commands taken from the validation data, to generate said validation result,
or
wherein said validating the neural network (440) includes:
simulating a virtual environment comprising a virtual vehicle such that the neural network receives virtual sensor data regarding the virtual environment of the virtual vehicle as inputs and proposes corresponding virtual control commands for controlling the virtual vehicle as outputs, such as to generate simulation results; and
analyzing the simulation results to determine said validation result.

3. The method (400) according to claim 2, wherein
simulating the neural network in a virtual environment of a virtual vehicle includes simulating the movement of the virtual vehicle based on a road model and a vehicle model, wherein the road model describes the route where the driver assistance system is intended to be activated, and the vehicle model describes the movement of said vehicle when controlled by control commands proposed by the neural network.

4. The method (400) according to any of claims 2 or 3, further comprising:
displaying the validation result to the human driver by using a human-machine-interface (HMI) (280) implemented in the vehicle (200), and activating the neural network for use in said driver assistance system, if the human driver uses the human-machine-interface (HMI) (280) to respond to the validation result by requesting the activation,
or
activating the neural network for use in said driver assistance system, if a comparison of the validation result with a threshold value indicates that the trained neural network replicates the human driver behavior with sufficient accuracy.

5. The method (400) according to any of claims 1 to 4, wherein any of the steps of: training the neural network based on the training data (420), validating the neural network to generate a validation result (440), and determining based on said validation result if the neural network should be activated for use in a driver assistance system (450), is performed by hardware external to the vehicle.

6. The method (400) according to any of claim 1 to 5, wherein the captured sensor data is provided by at least one of: a camera (230), a radar sensor (230) and/or a lidar sensor (230), attached to the vehicle (200) and wherein the captured control commands provided by the human driver, and the control commands proposed by the neural network, include a steering command or a throttle command.

7. A method for determining the driving behavior of a human driver (500), comprising:
capturing in a vehicle, while a human driver is operating the vehicle, sensor data regarding an environment of the vehicle and corresponding control commands provided by the human driver (510);
generating training data based on the sensor data and control commands (520);
training a neural network based on the training data (520);
simulating a virtual environment comprising a virtual vehicle (550) such that the neural network receives virtual sensor data regarding the virtual environment of the virtual vehicle as inputs and proposes corresponding virtual control commands for controlling the virtual vehicle as outputs, such as to generate simulation results; and
analyzing the simulation results to determine the driving behavior of the human driver (550).

8. The method (500) according to claim 7, further comprising forwarding said trained neural network to a hardware external to the vehicle (530), and performing at least one of simulating the neural network in a virtual environment of a virtual vehicle (540), and analyzing said simulation results (550), by said external hardware (300).

9. The method (500) according to any of claims 7 or 8, wherein determining the driving behavior of the human driver includes estimating the driving skills of a person.

10. A method for comparing the driving behaviors of a driver assistance system and a human driver (700), comprising:
capturing in a vehicle, while a human driver is operating the vehicle, sensor data regarding an environment of the vehicle and corresponding control commands provided by the human driver (710);
simulating the driver assistance system based on the captured sensor data such as to generate control commands proposed by the driver assistance system (720);
generating a comparison result by comparing the control commands provided by the human driver and the control commands proposed by the driver assistance system (730); and
displaying the comparison result to the human driver by using a human-machine-interface (HMI) implemented in the vehicle (740).

11. The method (700) according to claim 10, wherein the sensor data regarding the environment of the vehicle includes a video stream taken from a camera (230) attached to the vehicle (200), and
wherein the comparison result is generated based on a single frame of the video stream,
or
wherein the comparison result is generated based on statistical information of a plurality of frames of the video stream.

12. The method (700) according to claim 11, further comprising forwarding said comparison result to a hardware external to the vehicle, and determining by said external hardware (300) the driving behavior of the human driver based on the comparison result.

13. A system (100) including a vehicle (200), the vehicle (200) comprising:
a detection unit (220) configured to capture sensor data regarding an environment of a vehicle (200) and corresponding control commands provided by a human driver (240) while operating the vehicle (200);
a driver assistance system (270); and
a control unit (210) coupled to the detection unit (220) and to the driver assistance system, and configured to:
generate training data based on the sensor data and control commands;
train a neural network based on the training data, such that the neural network receives sensor data regarding the environment of the vehicle as an input and proposes corresponding control commands for the vehicle as an output;
validate the neural network to generate a validation result; and
determine based on said validation result if the neural network should be activated for use in the driver assistance system (270), and activate the neural network accordingly.

14. A system (100) for determining the driving behavior of a human driver, the system comprising:
a detection unit (220) of a vehicle (200) configured to capture sensor data regarding an environment of the vehicle (200) and corresponding control commands provided by a human driver (240) while operating the vehicle (200); and
a control unit (210) of the vehicle (200) coupled to the detection unit (220) and configured to:
generate training data based on the sensor data and control commands;
train a neural network based on the training data;
simulate a virtual environment comprising a virtual vehicle such that the neural network receives virtual sensor data regarding the virtual environment of the virtual vehicle as inputs and proposes corresponding virtual control commands for controlling the virtual vehicle as outputs, such as to generate simulation results; and
analyze said simulation results, such as to determine the driving behavior of the human driver (240).

15. A system (100) including a vehicle (200), the vehicle (200) comprising:
a detection unit (220) configured to capture sensor data regarding an environment of the vehicle (200) and corresponding control commands provided by a human driver (240) while operating the vehicle (200);
a human-machine-interface (HMI) (280) implemented in the vehicle (200);
a driver assistance system (270) implemented in the vehicle (200); and
a control unit (210) of the vehicle (200), coupled to the detection unit (220), driver assistance system (270) and human-machine-interface (HMI) (280), and configured to:
operate the driver assistance system (270) based on the captured sensor data such as to generate control commands proposed by the driver assistance system (270);
generate a comparison result by comparing the control commands provided by the human driver (240) with the control commands proposed by the driver assistance system (270); and
display the comparison result to the human driver (240) by using the human-machine-interface (HMI) (280).
